# FASCICULE DE BREVET EUROPEEN

(11) **EP 2 838 791 B1**
(45) Date de publication et mention de la délivrance du brevet: **18.11.2015**
(21) Numéro de dépôt: 13715717.8
(22) Date de dépôt: 15.04.2013
(51) Int. Cl.: B64C 13/04, B64C 13/46, G06F 3/01, G09B 9/28, G06F 3/038

(54) **DISPOSITIF ET PROCEDE DE COMMANDE ACTIVE D'UN RETOUR D'EFFORT POUR UN ORGANE DE PILOTAGE**
VORRICHTUNG UND VERFAHREN ZUR AKTIVEN STEUERUNG DER KRAFTRÜCKKOPPLUNG FÜR EINE STEUERUNGSVORRICHTUNG
DEVICE AND METHOD FOR ACTIVE CONTROL OF A FORCE FEEDBACK FOR A CONTROL DEVICE

(30) Priorité: 16.04.2012 FR 1253482
(43) Date de publication de la demande: 25.02.2015
(73) Titulaire: SAGEM DEFENSE SECURITE, 92100 Boulogne Billancourt (FR)
(72) Inventeur: BEGGIORA, Geoffrey, F-92100 Boulogne-Billancourt (FR); PIATON, Jérôme, F-92100 Boulogne-Billancourt (FR); MERCIER, Guillaume, F-92100 Boulogne-Billancourt (FR); VANDENBAVIERE, Yann, F-92100 Boulogne-Billancourt (FR)
(74) Mandataire: Regimbeau
(86) Numéro de dépôt international: PCT/EP2013/057842
(87) Numéro de publication internationale: WO 2013/156451

(56) Documents cités:
- EP-A1- 2 279 941
- WO-A1-98/37484
- FR-A1- 2 708 112
- US-A1- 2005 080 495

## Description

### DOMAINE DE L'INVENTION

Le domaine de l'invention est celui de la commande active d'un retour d'effort pour un organe de pilotage, tel qu'un mini-manche de pilotage d'un aéronef, notamment un hélicoptère. L'invention vise plus particulièrement la conception d'un mini manche avec une loi de retour d'effort appliquée au mini manche pour que le pilote ressente un effort quand il agit sur celui-ci.

### ARRIERE PLAN DE L'INVENTION

On connaît des mini manches passifs pour lesquels l'effort est restitué par des éléments mécaniques (à base de ressort, frein hydraulique,...). Il s'en suit qu'il faut dimensionner les pièces mécaniques suivant le retour d'effort que l'on souhaite appliquer. Les solutions passives sont donc par nature de conception figée. Elles peuvent en outre présenter une dérive de la précision due à l'usure des pièces mécaniques

On connaît des mini manches actifs disposant d'un système de contrôle de loi d'effort piloté par une électronique de commande. Ces solutions actives présentent l'avantage d'utiliser des éléments électromécaniques, et offrent la possibilité de modifier le logiciel qui établi le retour d'effort pour appliquer des retours d'effort différents.

Le document FR 2 708 112 A1 décrit une solution active mettant en oeuvre un asservissement de la position du manche à l'effort appliqué à celui-ci. Avec cette solution, au moment où le pilote lâche le manche, la valeur du capteur d'effort est à zéro et donc la consigne de courant délivrée au moteur augmente, ce qui provoque une forte accélération du moteur. Ce dernier va effectivement fournir le couple maximal à vitesse donnée pour revenir à sa position de référence (typiquement au point neutre d'origine). Il existe donc un risque que le retour du manche à la position d'origine ne s'opère pas correctement mais présente au contraire un dépassement de la position d'origine voire engendre des oscillations autour de l'origine ce qui peut s'avérer préjudiciable à la sécurité du système.

### EXPOSÉ DE L'INVENTION

L'invention a pour objectif de proposer une solution de commande de mini manche fiable, reproductible, précise, adaptable, avec la possibilité de reproduire des lois d'effort complexes et modifiables sans impact sur la conception globale (paramétrable), avec un faible encombrement et peu coûteuse.

A cet effet, l'invention propose un dispositif de commande active d'un retour d'effort pour un organe de pilotage, comprenant un calculateur, un capteur de position configuré pour fournir au calculateur un signal de position effective de l'organe de pilotage, et un actionneur assurant le déplacement de l'organe de pilotage sur commande du calculateur, le calculateur étant configuré pour exploiter le signal de position effective et moduler un courant de consigne délivré à l'actionneur pour assurer un déplacement asservi en position de l'organe de pilotage,
caractérisé en ce que le calculateur est en outre configuré pour élaborer au moins une borne de saturation selon une fonction prédéterminée de la valeur du signal de position effective de type loi position/effort, et pour saturer le courant de consigne à l'aide de l'au moins une borne de saturation.

Certains aspects préférés, mais non limitatifs, de ce dispositif sont les suivants :
- le calculateur assure un asservissement de position en cascade de l'actionneur, et l'asservissement de position en cascade est mis en oeuvre à l'aide d'une boucle principale d'asservissement de position et d'une boucle secondaire interne d'asservissement de vitesse ;
- le calculateur comporte en outre un estimateur de vitesse exploitant le signal de position effective pour fournir un signal de vitesse effective, et le calculateur élabore en outre l'au moins une borne de saturation également selon un fonction prédéterminée de la valeur du signal de vitesse effective de type loi vitesse/effort ;
- il comporte en outre un capteur d'effort configuré pour fournir un signal d'effort effectif exercé par un utilisateur sur l'organe de pilotage et dans lequel le calculateur est en outre configuré pour calculer un erreur d'effort correspondant à la différence entre le signal d'effort effectif et l'au moins une borne de saturation et pour corriger le courant de consigne en fonction du signal d'erreur d'effort ;
- la correction du courant de consigne consiste à injecter l'erreur d'effort sur le courant de consigne saturé ;
- la correction du courant de consigne consiste à injecter l'erreur d'effort sur l'au moins une borne de saturation du courant de consigne ;
- le calculateur est configuré pour ajuster un niveau d'autorité de la correction du courant de consigne en fonction de l'erreur d'effort.

Selon un autre aspect, l'invention concerne un aéronef comprenant une gouverne d'aéronef, un organe de pilotage pour entraîner la gouverne d'aéronef, et un dispositif de commande active d'un retour d'effort pour l'organe de pilotage conforme à l'invention.

Selon encore un autre aspect, l'invention concerne un procédé de commande active d'un retour d'effort pour un organe de pilotage dont le déplacement est assuré par un actionneur sur commande d'un calculateur, dans lequel on mesure une position effective de l'organe de pilotage et on met en oeuvre une modulation d'un courant de consigne délivré à l'actionneur pour assurer un asservissement de position du déplacement de l'organe de pilotage, caractérisé en ce que l'on élabore au moins une borne de saturation selon une fonction prédéterminée de la valeur de la position effective mesurée de type loi position/effort, et on vient saturer le courant de consigne en limite haute et basse à l'aide de l'au moins une borne de saturation.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels:
- la figure 1 représente un premier mode de réalisation possible d'un dispositif de commande selon l'invention ;
- la figure 2 représente une réalisation possible de l'élaboration de deux bornes de saturation ;
- la figure 3 représente une réalisation possible d'une correction pouvant être apportée au courant de consigne saturé du premier mode de réalisation ;
- la figure 4 représente un second mode de réalisation possible d'un dispositif de commande selon l'invention ;
- la figure 5 représente une réalisation possible de l'élaboration d'une borne de saturation dans le cadre du second mode de réalisation.

### DESCRIPTION DETAILLEE DE L'INVENTION

L'invention concerne un dispositif de commande active d'un retour d'effort pour un organe de pilotage d'un véhicule, notamment un véhicule comprenant une gouverne aérodynamique ou hydrodynamique. L'invention s'étend à un procédé de commande active d'un retour d'effort pour un tel organe de pilotage.

L'invention trouve une application privilégiée à la commande active d'un retour d'effort pour un mini-manche (ou « stick » en anglais) de conduite d'un aéronef, notamment un hélicoptère. On prendra dans la suite l'exemple d'un tel mini-manche d'hélicoptère. L'invention n'est toutefois pas limitée à cet exemple de réalisation, et dans la suite le terme « pilotage » désigne au sens large la conduite d'un véhicule par un pilote humain manoeuvrant un organe de pilotage, tel qu'un manche, une manette, un volant, une pédale, etc.

De manière classiquement connue en soi, un dispositif de pilotage d'un véhicule comprend un organe de pilotage relié à un organe de conduite (notamment une gouverne) et un actionneur motorisé associé à l'organe de pilotage de façon à simuler un comportement dynamique spécifique de l'organe de pilotage pour créer un rappel au neutre et une sensation artificielle d'effort résistant quand le pilote agit sur l'organe de pilotage. Le dispositif selon l'invention comprend ainsi un calculateur et un actionneur assurant le déplacement de l'organe de pilotage sur commande du calculateur.

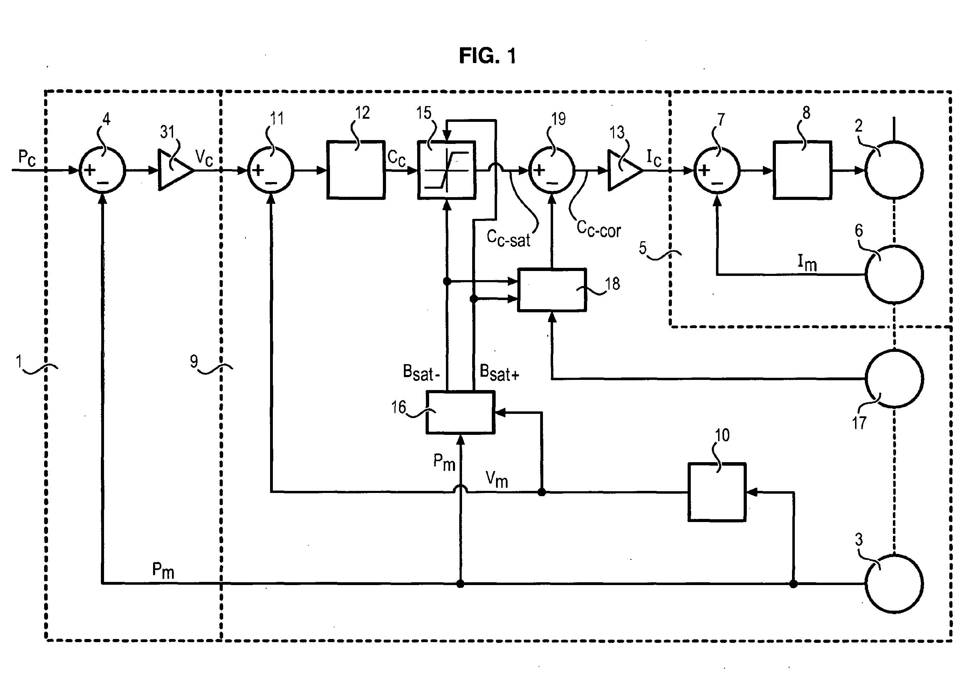

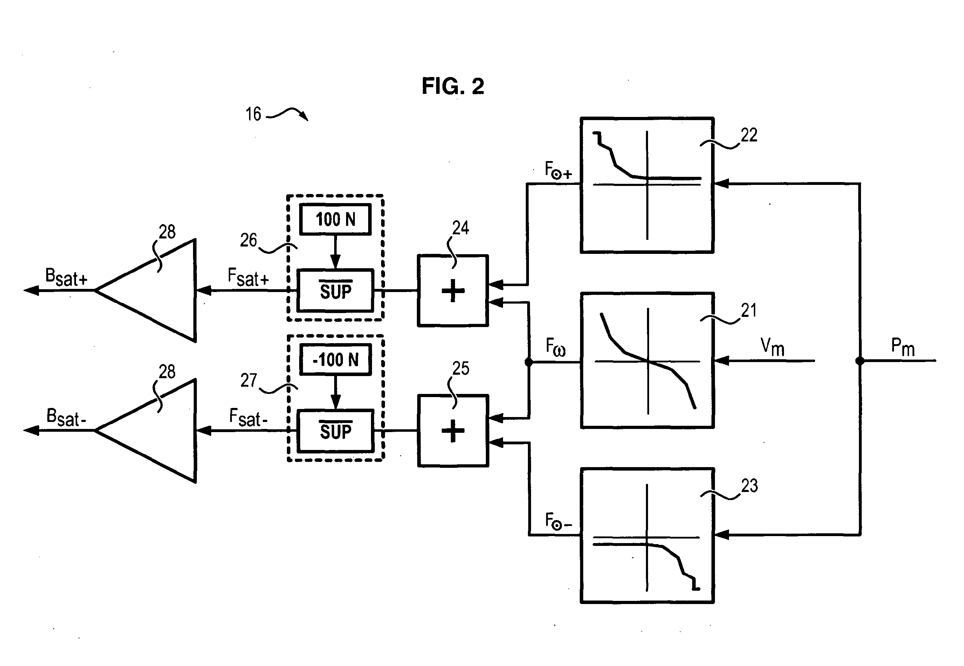

En référence aux figures 1 et 2 illustrant deux modes de réalisation possible d'un dispositif selon l'invention et sur lesquelles les éléments en commun portent les mêmes références, l'actionneur est par exemple un moteur 1 de type sans balais (« brushless ») relié au mini-manche par le biais d'un réducteur. Le calculateur fournit une commande moteur qui repose de manière privilégiée sur trois boucles de régulation imbriquées : une boucle principale de position du moteur 1, une boucle interne de vitesse du moteur 9 et une boucle de courant 5 qui est directement l'image du couple moteur. Le calculateur réalise ainsi un asservissement de position en cascade avec la boucle principale d'asservissement de position 1 et la boucle secondaire interne d'asservissement de vitesse 9 pour venir moduler un courant de consigne Ic délivré à la boucle de courant du moteur. On notera toutefois que la commande moteur fournie par le calculateur peut ne pas exploiter de boucle interne de vitesse.

Le moteur est asservi en position pour que le mini manche revienne toujours à une position de consigne Pc, qui est par exemple la position verticale. Dès que le pilote veut éloigner le mini manche de cette position, le moteur applique un couple pour revenir à sa position initiale de sorte que le pilote ressent un effort au mini manche.

La boucle de position 1 comprend un capteur de position 3 (capteur de position du mini manche, ou capteur de position du moteur comme représenté qui présente l'avantage d'une meilleure résolution) qui fournit au calculateur un signal de position effective Pm de l'organe de pilotage. La boucle de position 1 comprend un différentiateur 4 qui réalise la différence entre la position de consigne Pc et le signal de position effective Pm, et un régulateur de position 31 qui élabore une vitesse de consigne Vc exploitée par la boucle de vitesse 9.

La boucle de courant 5 comprend un capteur de courant 6 (en réalité un capteur par phase) mesurant le courant effectif Im circulant dans le moteur, un différentiateur 7 qui réalise la différence entre le courant de consigne Ic et le courant effectif Im, et un régulateur de courant 8. Le contrôleur de courant 8 peut notamment être configuré pour réaliser une commande vectorielle du moteur brushless selon laquelle on applique un champ magnétique statorique toujours perpendiculaire au champ magnétique rotorique afin que le moteur délivre un couple maximum à vitesse donnée. On définit pour cela un repère commun au stator et au rotor et on commande le moteur par des consignes dans ce repère commun.

La boucle de vitesse 9 comprend un estimateur de vitesse 10, typiquement un dérivateur 10 exploitant le signal de position effective Pm délivré par le capteur de position 3, pour fournir un signal de vitesse effective Vm. En variante, la boucle de vitesse peut comprendre un capteur de vitesse.

La boucle de vitesse 9 comporte un différentiateur qui réalise la différence entre la vitesse de consigne Vc et le signal de vitesse effective Vm, et un régulateur de vitesse 12 qui élabore un couple de consigne Cc (figure 1) ou un régulateur de vitesse 14 qui élabore directement un courant de consigne (figure 2).

L'asservissement mis en oeuvre dans le cadre de l'invention exploite des informations de position, et éventuellement de vitesse. Ceci s'avère avantageux dans la mesure où la commande du moteur et donc la position du manche ne sont pas asservie à l'effort appliqué, ce qui permet de s'affranchir de la problématique du lâcher de manche qui avec un capteur d'effort vient provoquer une forte accélération du moteur.

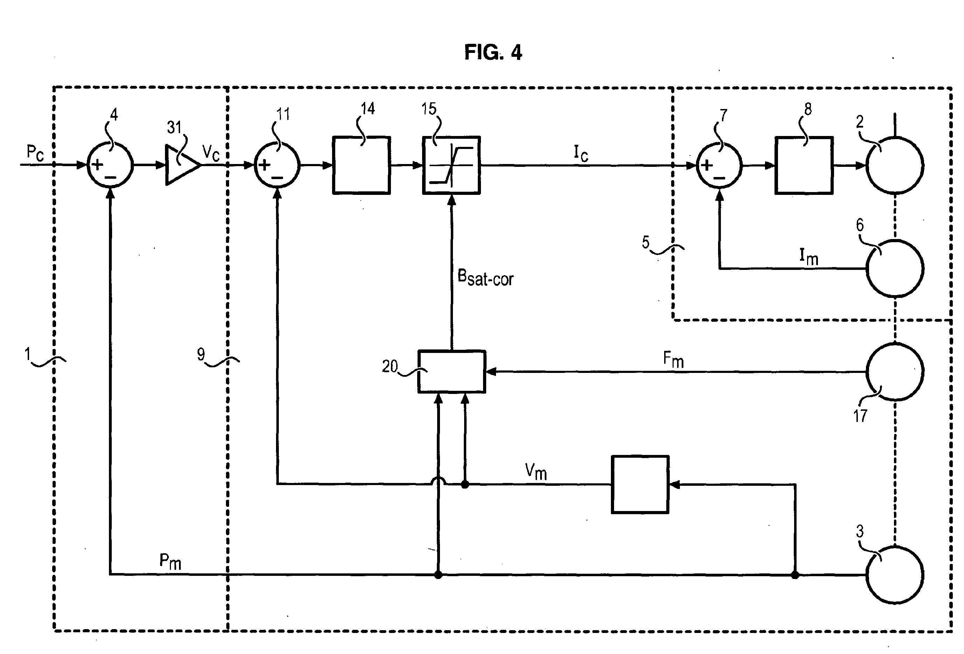

Dans un asservissement position/vitesse/courant classique, c'est le courant de consigne (directement image du couple de consigne de couple Cc, via un simple multiplicateur 5 comme représenté sur la figure 1) en sortie du régulateur de vitesse qui est exploité par la boucle de courant. L'invention propose quant à elle de venir saturer le courant de consigne sortant du régulateur de vitesse et servant à la commande vectorielle du moteur 2. La saturation s'opère en sortie du régulateur de vitesse 12, 14 au moyen d'un limiteur 15 recevant au moins une borne de saturation Bsat+,Bsat-,Bsat-cor depuis une unité de saturation 16, 20. Sur la figure 1, le limiteur 15 reçoit un couple de consigne Cc et délivre un couple de consigne saturé Cc-sat en limite haute et basse par les bornes de saturation Bsat+ et Bsat-. Le couple de consigne saturé Cc-sat est ensuite converti en courant de consigne saturé Ic. Sur la figure 4, le limiteur reçoit du limiteur 14 un courant de consigne et délivre le courant de consigne saturé en limite haute et basse par la borne de saturation Bsat-cor.

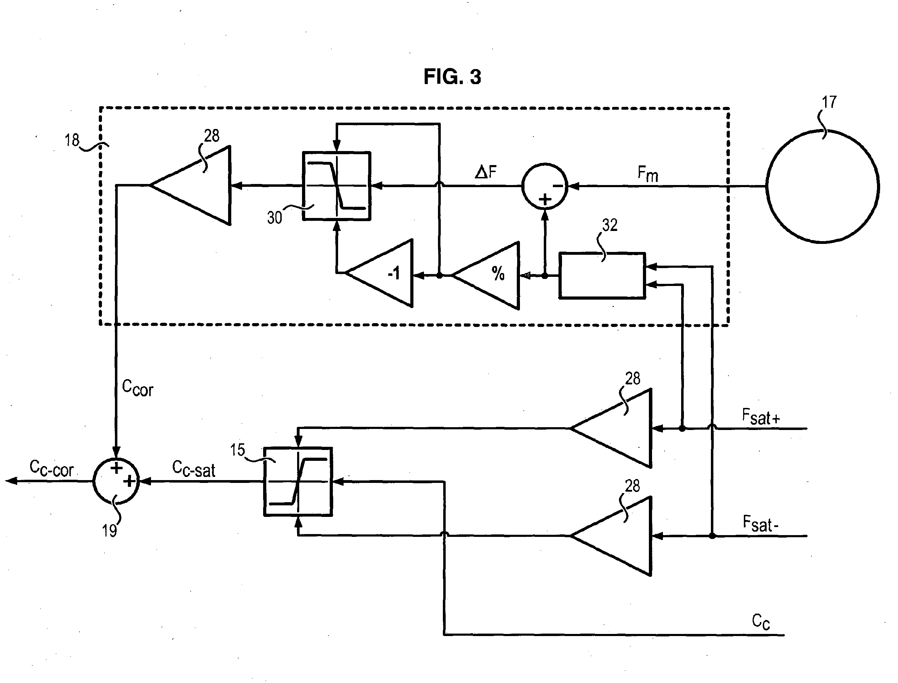

En référence à la figure 3, le courant de consigne est plus précisément saturé par au moins une borne de saturation issue d'une ou plusieurs tables de loi d'effort paramétrables 21-23. On cherche ainsi à ce que le moteur délivre le couple décrit par la ou les tables d'effort, et non le couple maximum donné par la commande vectorielle. L'au moins une borne de saturation est plus précisément calculée selon une fonction prédéterminée de la valeur du signal de position effective de type loi position/effort ; elle est ainsi issue d'une table de déflexion qui pour une position angulaire en entrée donne un effort en sortie. Ainsi, dès que le pilote déplace le mini manche, le moteur va fournir le couple maximal à vitesse donnée pour revenir à l'origine et ce couple est saturé par le couple défini par la table de déflexion pour que le pilote ressente l'effort désiré au manche.

Dans un mode de réalisation possible illustré sur la figure 3, on élabore deux bornes de saturation Bsat+, Bsat- pour réaliser des saturations non nécessairement symétriques en limite haute et basse du courant de consigne. On utilise pour ce faire deux tables de déflexion 22, 23. Une première table de déflexion 22 est utilisée pour élaborer la borne de saturation haute Bsat+: elle fournit un effort positif Fθ+ lorsque la position du mini manche est négative. On prévoit avantageusement que cette table fournit un effort de démarrage (« breakout ») de valeur positif non nul lorsque la position du mini manche est positive, correspondant à l'effort devant être exercé par le pilote pour pouvoir déplacer positivement le mini manche de sa position initiale. La seconde table de déflexion 23 est utilisée pour élaborer la borne de saturation basse Bsat-: elle fournit un effort négatif Fθ- lorsque la position du mini manche est positive. Elle présente également un niveau de « breakout » pour pouvoir déplacer négativement le mini-manche de sa position initiale.

Les profils des tables de déflexion 22, 23 ne sont pas nécessairement symétriques. On peut ainsi tenir compte de ce qu'un pilote dispose de plus de force en poussant qu'en tirant le mini manche car il peut appliquer tout le poids de son corps en poussée. On peut également tenir compte du fait que le pilote dispose de plus de force avec sa main droite pour déplacer un objet vers la gauche que vers la droite.

Dans une variante de réalisation, on exploite en outre une table d'amortissement qui pour une vitesse en entrée fournit un effort Fω en sortie. Cette table permet d'exercer un effort plus important au mini manche si celui-ci est déplacé de façon rapide par le pilote. Cette table permet également de ralentir le retour à l'origine du mini manche en cas de lâcher de manche du pilote.

Comme représenté sur les figures 1 et 2, l'unité de saturation 16 exploite le signal de position effective Pm et le signal de vitesse effective, et fait circuler ces informations dans les tables de loi d'effort 21-23 qui sortent chacune une valeur d'effort Fω, Fθ+, Fθ-. On somme au moyen d'additionneurs 24, 25 la valeur d'effort Fω issue de la table d'amortissement 21 avec chacune des valeurs d'effort Fθ+, Fθ- issues des tables de déflexion 22, 23. Le résultat fournit des efforts de saturation haut et bas Fsat+, Fsat-, éventuellement après limitation 26, 27 à une valeur d'effort maximale admissible (prises à 100N et -100N dans l'exemple). Ces efforts de saturation haut et bas Fsat+, Fsat- sont ensuite convertis 28 en bornes de saturation haute et basse Bsat+, Bsat- (bornes de saturation en couple pour l'exemple des figures 1 et 2).

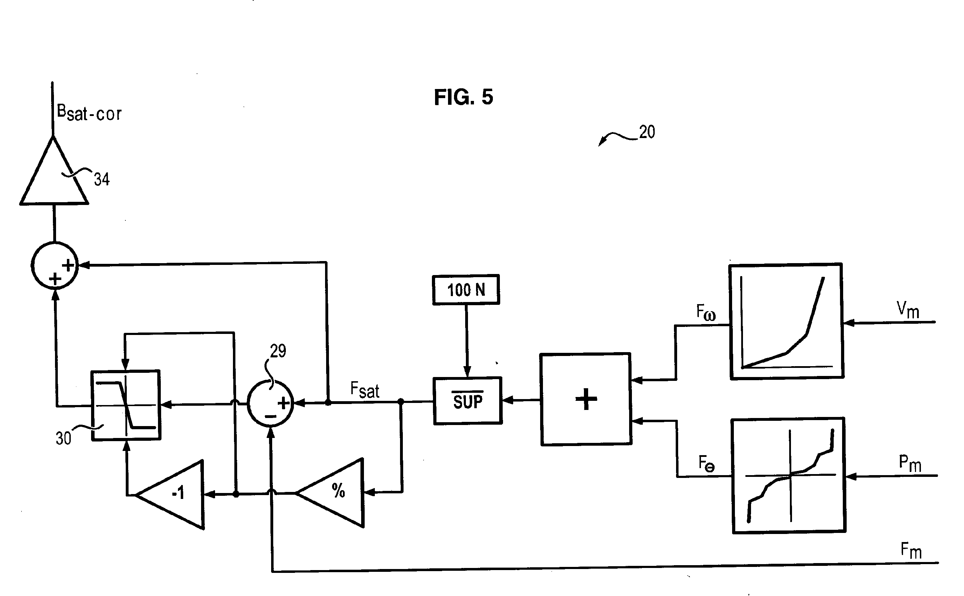

Comme représenté sur la figure 5, on peut ne calculer qu'une borne de saturation qui sera appliquée à la fois en limite haute et basse. On n'exploite alors qu'une seule table de déflexion 32 dont la sortie en effort peut être additionnée à la sortie en effort d'une table d'amortissement 21 pour fournir, après éventuelle limitation à une valeur maximale admissible, un effort de saturation Fsat. Comme par ailleurs représentée sur les figures 4 et 5, cet effort de saturation peut être converti (après éventuelle correction comme cela décrit par la suite) en une borne de saturation directement en courant Bsat-cor.

On aura compris de ce qui précède que l'on peut désigner par le même terme de « borne de saturation » à la fois une borne de saturation en couple, en courant ou en effort.

Dans une variante de réalisation, le dispositif selon l'invention comporte en outre un capteur d'effort configuré pour fournir un signal d'effort effectif Fm exercé par un utilisateur sur l'organe de pilotage. Le calculateur est alors configuré pour calculer un signal d'erreur d'effort ΔF correspondant à la différence entre le signal d'effort effectif Fm et une borne de saturation (ici exprimée en effort de saturation Fsat+, Fsat-, Fsat) et pour corriger le courant de consigne en fonction du signal d'erreur d'effort.

Dans une première réalisation de cette variante représentée sur les figures 1 et 3, on injecte le signal d'erreur d'effort sur le courant de consigne saturé (plus précisément sur le couple de consigne saturé Cc-sat après conversion en erreur de couple Ccor comme représenté). Dans cette réalisation, on vient donc appliquer une correction du courant de consigne par l'erreur mesurée entre le capteur d'effort et la consigne après saturation. Le dispositif selon l'invention comporte alors une unité de correction 18 recevant le signal d'effort effectif Fm fourni par le capteur d'effort 17 et les efforts de saturation Fsat+, Fsat-. Un sélectionneur 32 choisit l'un ou l'autre de ces efforts selon que la position est positive ou négative. Un différentiateur 29 calcule l'erreur d'effort ΔF, et un convertisseur la convertit en erreur de couple Ccor. Un différentiateur 19 permet alors de corriger le couple de consigne saturé CC-sat par l'erreur de couple Ccor pour fournir le couple de consigne saturé corrigé Cc-cor.

Dans une seconde réalisation de cette variante représentée sur les figures 4 et 5, on injecte le signal d'erreur d'effort sur l'au moins une borne de saturation du courant de consigne. Dans cette seconde réalisation, le limiteur utilise donc au moins une borne de saturation intégrant la correction du courant de consigne par l'erreur mesurée entre le capteur d'effort et la consigne. Le dispositif selon l'invention comporte alors une unité de saturation et de correction 20 chargée d'élaborer une telle borne de saturation corrigée de l'erreur d'effort. Cette unité 20 comprend, outre les éléments déjà décrit précédemment en liaison avec le calcul de l'effort de saturation Fsat, un différentiateur 29 qui calcule l'erreur d'effort ΔF entre l'effort effectif mesuré Fm et l'effort de saturation Fsat, et un additionneur 33 qui ajoute cette erreur d'effort à l'effort de saturation pour produire après passage au sein d'un convertisseur 34 une borne de saturation Bsat-cor.

Dans le cadre de cette variante, et comme représenté sur les figures 3 et 5, on peut par ailleurs venir ajuster un niveau d'autorité de la correction du courant de consigne en fonction du signal d'erreur d'effort ΔF. Cet ajustement peut notamment consister à saturer l'erreur d'effort par un pourcentage de la borne de saturation (ici exprimée en effort de saturation Fsat+, Fsat-, Fsat) au moyen d'un limiteur 30.

Cet ajustement du niveau d'autorité de la correction du courant de consigne permet de limiter le pouvoir du capteur d'effort, et d'éviter notamment qu'un lâcher de manche provoque une forte accélération du moteur susceptible de l'endommager.

## Revendications

1. Dispositif de commande active d'un retour d'effort pour un organe de pilotage, comprenant un calculateur, un capteur de position (3) configuré pour fournir au calculateur un signal de position effective (Pm) de l'organe de pilotage, et un actionneur (2) assurant le déplacement de l'organe de pilotage sur commande du calculateur, le calculateur étant configuré pour exploiter le signal de position effective et moduler un courant de consigne (Ic) délivré à l'actionneur pour assurer un déplacement asservi en position de l'organe de pilotage,
**caractérisé en ce que** le calculateur est en outre configuré pour élaborer au moins une borne de saturation (Bsat, Bsat+, Bsat-, Bsat-cor) selon une fonction prédéterminée de la valeur du signal de position effective de type loi position/effort (21, 23, 32), et pour saturer le courant de consigne à l'aide de l'au moins une borne de saturation.

2. Dispositif selon la revendication 1, dans lequel le calculateur assure un asservissement de position en cascade de l'actionneur, l'asservissement de position en cascade étant mis en oeuvre à l'aide d'une boucle principale d'asservissement de position (1) et d'une boucle secondaire interne d'asservissement de vitesse (9).

3. Dispositif selon la revendication 2, dans lequel le calculateur comporte en outre un estimateur de vitesse (10) exploitant le signal de position effective (Pm) pour fournir un signal de vitesse effective (Vm), et dans lequel le calculateur élabore en outre l'au moins une borne de saturation également selon un fonction prédéterminée de la valeur du signal de vitesse effective de type loi vitesse/effort (21, 31).

4. Dispositif selon l'une des revendications précédentes, comportant en outre un capteur d'effort (17) configuré pour fournir un signal d'effort effectif (Fm) exercé par un utilisateur sur l'organe de pilotage et dans lequel le calculateur est en outre configuré pour calculer un erreur d'effort (ΔF) correspondant à la différence entre le signal d'effort effectif et l'au moins une borne de saturation et pour corriger le courant de consigne en fonction du signal d'erreur d'effort.

5. Dispositif selon la revendication 4, dans lequel la correction du courant de consigne consiste à injecter l'erreur d'effort sur le courant de consigne saturé (Cc-sat).

6. Dispositif selon la revendication 4, dans lequel la correction du courant de consigne consiste à injecter l'erreur d'effort sur l'au moins une borne de saturation du courant de consigne.

7. Dispositif selon l'une des revendications 4-6, dans lequel le calculateur est configuré pour ajuster un niveau d'autorité de la correction du courant de consigne en fonction de l'erreur d'effort.

8. Dispositif selon la revendication 7, dans lequel l'ajustement du niveau d'autorité de la correction du courant de consigne consiste à saturer l'erreur d'effort (ΔF) par un pourcentage de l'au moins une borne de saturation.

9. Aéronef comprenant une gouverne d'aéronef, un organe de pilotage pour entraîner la gouverne d'aéronef, et un dispositif de commande active d'un retour d'effort pour l'organe de pilotage conforme à l'une quelconque des revendications précédentes.

10. Procédé de commande active d'un retour d'effort pour un organe de pilotage dont le déplacement est assuré par un actionneur sur commande d'un calculateur, dans lequel on mesure une position effective de l'organe de pilotage et on met en oeuvre une modulation d'un courant de consigne délivré à l'actionneur pour assurer un asservissement de position du déplacement de l'organe de pilotage,
**caractérisé en ce que** l'on élabore au moins une borne de saturation selon une fonction prédéterminée de la valeur de la position effective mesurée de type loi position/effort, et on vient saturer le courant de consigne en limite haute et basse à l'aide de l'au moins une borne de saturation.

## Patentansprüche

1. Vorrichtung zur aktiven Steuerung einer Kraftrückkopplung für ein Steuerorgan, umfassend einen Rechner, einen Positionssensor (3), der konfiguriert ist, um an den Rechner ein Signal der tatsächlichen Position (Pm) des Steuerorgans zu liefern, und einen Aktuator (2), der die Verlagerung des Steuerorgans auf Befehl des Rechners sichert, wobei der Rechner konfiguriert ist, um das Signal der tatsächlichen Position zu nutzen und einen an den Aktuator gelieferten Sollstrom (Ic) zu modulieren, um eine geregelte Verlagerung in Position des Steuerorgans zu sichern,
**dadurch gekennzeichnet dass** der Rechner ferner konfiguriert ist, um mindestens eine Sättigungsklemme (Bsat, Bsat+, Bsat-, Bsat-cor) gemäß einer vorbestimmten Funktion des Werts des Signals der tatsächlichen Position vom Typ Positions-/Kraft-Gesetz (21, 23, 32) zu ermitteln und um den Sollstrom mit Hilfe von mindestens einer Sättigungsklemme zu sättigen.

2. Vorrichtung nach Anspruch 1, wobei der Rechner eine Kaskaden-Positionsregelung des Aktuators sichert, wobei die Kaskaden-Positionsregelung mit Hilfe einer Positionsregelungs-Hauptschleife (1) und einer internen sekundären Geschwindigkeitsregelungs-Schleife (9) durchgeführt wird.

3. Vorrichtung nach Anspruch 2, wobei der Rechner ferner einen Geschwindigkeitsschätzer (10) aufweist, der das Signal der tatsächlichen Position (Pm) nutzt, um ein Signal der tatsächlichen Geschwindigkeit (Vm) zu liefern und wobei der Rechner ferner die mindestens eine Sättigungsklemme ebenfalls gemäß einer vorbestimmten Funktion des Werts des Signals der tatsächlichen Geschwindigkeit vom Typ Geschwindigkeits-/Kraft-Gesetz (21, 31) ermittelt.

4. Vorrichtung nach einem der vorangehenden Ansprüche, die ferner einen Kraftsensor (17) aufweist, der konfiguriert ist, um ein Signal der tatsächlichen Kraft (Fm) zu liefern, die von einem Benutzer auf das Steuerorgan ausgeübt wird und wobei der Rechner ferner konfiguriert ist, um einen Kraftfehler (ΔF) zu berechnen, der der Differenz zwischen dem Signal der tatsächlichen Kraft und der mindestens einen Sättigungsklemme entspricht und um den Sollstrom in Abhängigkeit vom Kraftfehlersignal zu korrigieren.

5. Vorrichtung nach Anspruch 4, wobei die Korrektur des Sollstroms darin besteht, den Kraftfehler in den gesättigten Sollstrom (Cc-sat) einzuspeisen.

6. Vorrichtung nach Anspruch 4, wobei die Korrektur des Sollstroms darin besteht, den Kraftfehler in die mindestens eine Sättigungsklemme des Sollstroms einzuspeisen.

7. Vorrichtung nach einem der Ansprüche 4 bis 6, wobei der Rechner konfiguriert ist, um ein Autoritätsniveau der Korrektur des Sollstroms in Abhängigkeit von dem Kraftfehler einzustellen.

8. Vorrichtung nach Anspruch 7, wobei die Einstellung des Autoritätsniveaus der Korrektur des Sollstroms darin besteht, den Kraftfehler (ΔF) durch einen Prozentsatz der mindestens einen Sättigungsklemme zu sättigen.

9. Luftfahrzeug, das ein Luftfahrzeugruder, ein Steuerorgan zum Bewegen des Luftfahrzeugruders und eine Vorrichtung zur aktiven Steuerung einer Kraftrückkopplung für das Steuerorgan nach einem der vorangehenden Ansprüche umfasst.

10. Verfahren zur aktiven Steuerung einer Kraftrückkopplung für ein Steuerorgan, dessen Verlagerung von einem Aktuator auf Befehl eines Rechners gesichert ist, wobei eine tatsächliche Position des Steuerorgan gemessen und eine Modulation eines an den Aktuator gelieferten Sollstroms durchgeführt wird, um eine Positionsregelung der Verlagerung des Steuerorgans zu sichern,
**dadurch gekennzeichnet, dass** mindestens eine Sättigungsklemme gemäß einer vorbestimmten Funktion des Werts der gemessenen tatsächlichen Position vom Typ Positions-/Kraft-Gesetz ermittelt wird und der Sollstrom am oberen und unteren Limit mit Hilfe der mindestens einen Sättigungsklemme gesättigt wird.

## Claims

1. A device for active control of a force feedback for a steering member, comprising a calculator, a position sensor (3) configured to provide the calculator with an effective position signal (Pm) of the steering member, and an actuator (2) ensuring displacement of the steering member on command from the calculator, the calculator being configured to use the effective position signal and modulate a setpoint current (Ic) delivered to the actuator to ensure position-controlled displacement of the steering member,
**characterized in that** the calculator is also configured to generate at least one saturation terminal (Bsat, Bsat+, Bsat-, Bsat-cor) according to a predetermined function of the value of the effective position signal of position/force law type (21, 23, 32), and to saturate the setpoint current by means of the at least one saturation terminal.

2. The device according to Claim 1, wherein the calculator provides a position control in cascade of the actuator, the position control in cascade being executed by means of a main position control loop (1) and an internal secondary speed control loop (9).

3. The device according to Claim 2, wherein the calculator further comprises a speed estimator (10) using the effective position signal (Pm) to provide an effective speed signal (Vm), and wherein the calculator further generates the at least one saturation terminal also according to a predetermined function of the value of the effective speed signal of speed/force law type (21, 31).

4. The device according to any one of the preceding claims, further comprising a force sensor (17) configured to provide an actual force signal (Fm) exerted by a user on the steering member and wherein the calculator is also configured to calculate a force error (ΔF) corresponding to the difference between the actual force signal and the at least one saturation terminal and to correct the setpoint current as a function of the force error signal.

5. The device according to Claim 4, wherein the correction of the setpoint current consists of injecting the force error on the saturated setpoint current (Cc-sat).

6. The device according to Claim 4, wherein the correction of the setpoint current consists of injecting the force error on the at least one saturation terminal of the setpoint current.

7. The device according to any one of Claims 4 to 6, wherein the calculator is configured to adjust a level of authority of the correction of the setpoint current as a function of the force error.

8. The device according to Claim 7, wherein the adjustment of the level of authority of the correction of the setpoint current consists of saturating the force error (ΔF) by a percentage of the at least one saturation terminal.

9. An aircraft comprising an aircraft control surface, a steering member for driving the aircraft control surface, and a device for active control of a force feedback for the steering member according to any one of the preceding claims.

10. A method for active control of a force feedback for a steering member which displacement is provided by an actuator controlled by a calculator, wherein an effective position of the steering member is measured and modulation of a setpoint current delivered to the actuator is executed to ensure a position control of the displacement of the steering member,
**characterized in that** at least one saturation terminal is generated according to a predetermined function of the value of the measured effective position of position/force law type, and the setpoint current is saturated at high and low limit by means of the at least one saturation terminal.
